# EUROPÄISCHE PATENTSCHRIFT

(11) **EP 1 088 639 B1**
(45) Veröffentlichungstag und Bekanntmachung des Hinweises auf die Patenterteilung: **05.11.2003**
(21) Anmeldenummer: 99119229.5
(22) Anmeldetag: 28.09.1999
(51) Int. Cl.: B29C 44/38, B29C 44/12

(54) **Verfahren zur Herstellung von Sandwichelementen mit Polyurethan-Schaumkern (PUR)**
Method of making sandwich elements with polyurethane foam core
Méthode pour la fabrication des éléments de sandwich à noyau en mousse de polyuréthane

(43) Veröffentlichungstag der Anmeldung: 04.04.2001
(73) Patentinhaber: IBW Ingenieur-Büro Woitzel GmbH, 49479 Ibbenbüren (DE)
(72) Erfinder: Woitzel, Heinz, 49479 Ibbenbüren (DE)
(74) Vertreter: Busse & Busse Patentanwälte

(56) Entgegenhaltungen:
- DE-A- 19 728 648
- DE-A- 19 812 470
- GB-A- 1 335 496

## Beschreibung

Die nach einem Verfahren gemäß GB-A-0 335 496 diskontinuierlich hergestellten Sandwichelemente bestehen aus zwei festen Deckschichten (1, 2) und Kern aus PUR (3). Die Deckschichten können aus Stahlblech, Alu-Blech, VA-Blech, Kupferblech o. ä. gewählt sein; ebenso aus Faserplatten, Kunststoffplatten usw.
Die Distanz zwischen den Deckschichten wird durch Ausschäumen mit PUR-Schaum ausgefüllt (PUR-Schaumkern). Während des Ausschäumens reagiert der aus mindestens zwei Komponenten bestehende PUR-Schaum bei gleichzeitiger Volumenvergrößerung (Schaumbildung) nicht nur, sondern verklebt sich gleichzeitig mit den Deckschichten (4).
Das Schaum-Reaktionsgemisch wird mittels einer Dosierund Mischmaschine (5) aufbereitet.

Die Rohdichte des ungeschäumten Reaktionsgemisches (10) liegt im Bereich 1000 bis 1200 g/l; die des fertigen Schaumes (3) bei 40 bis 100 g/l.

Daraus folgt, daß in den Hohlraum des Sandwichelementes, gebildet aus Länge (L) x Breite (B) x Dicke (S) (Schaumkern), nur ein Bruchteil an flüssigem Reaktionsgemisch einzubringen ist.

Um eine gleichmäßige, über Länge x Breite des herzustellenden Elementes, Schaumstruktur zu erreichen, muß mit gleichen Rohdichten, Festigkeitswerten und Klebkräften das Reaktionsgemisch während der flüssigen Phase so verteilt eingebracht werden, daß die Schaumbildung unter Ausbildung einer gleichmäßig steigenden Schaumfront (6) in Steigrichtung (7) erfolgt.

Bekannt sind z.B. folgende Verfahren:
* Punktanguß bei Elementen bis ca. 5 m² Fläche und einem Länge/Breite-Verhältnis von 2 bis 5.
* Flachbeschichtung bei großflächigen Sandwichelementen bis zu ca. 45 m² Fläche. Hierbei wird das Reaktionsgemisch durch ein Gießrohr bei Flachlage des Elementes auf die untere Deckschicht beschichtet.

Bei dem neuen Verfahren gem. Erfindungsgedanken werden besonders lange schmale Elemente bis ca. Länge-/Breiteverhältnis von 10 bis 30 und bis ca. 15 m² Fläche betrachtet.

Gemäß vorliegender Erfindung wird eine Kante, vornehmlich die längste eines Sandwichelementes als Hohlprofil (8) gem. Zeichnung ausgebildet. Dieses Hohlprofil wirkt als Verteiler des Stirnseitig an einem Ende von einem Mischkopf eingebrachten Reaktionsgemisches (10). Der Länge nach weist dieses Hohlprofil mehrere Bohrungen (11) auf, durch die das Reaktionsgemisch in den Hohlraum des Sandwichelementes gelangt. Die Bohrungsdurchmesser sind so abgestuft, daß eine gleichmäßige Fließfront (6) des auftreibenden Schaumes in Steigrichtung (7) zur Füllung des Sandwichelementes entsteht.

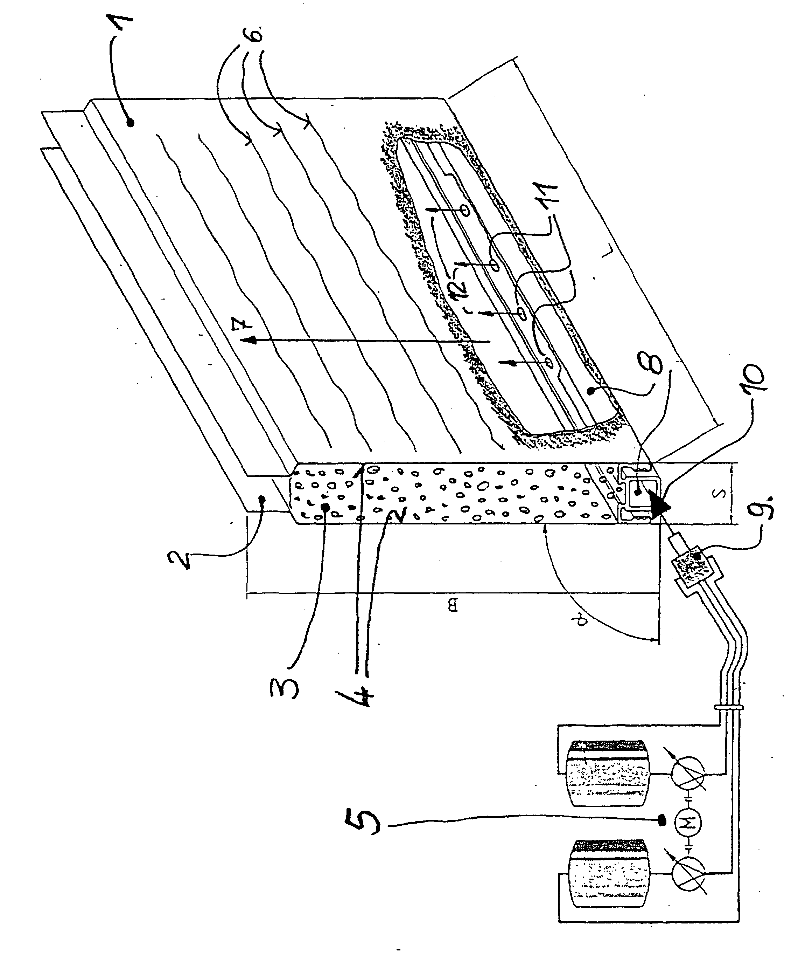

## Patentansprüche

1. Verfahren zur Herstellung flacher Sandwichelemente, bei dem ein Hohlraum zwischen einander gegenüberliegenden, in eine allseits geschlossene Form eingebrachten Deckschichten (1, 2) mit PUR-Hartschaum (3) gefüllt wird, der aus der Reaktion von zumindest zwei mittels eines Füllrohres zugeführten Kunststoffkomponenten entsteht, die aus einer Reihe von zum Hohlraum gerichteten Austrittsöffnungen aus dem Füllrohr austreten und sich bei einer Volumenvergrößerung mit den Deckschichten verkleben, **dadurch gekennzeichnet, daß** innerhalb der Form eine der Schmalseiten des Hohlraums von einem als das Füllrohr wirksamen Hohlprofilkörper (8) eingenommen wird, das aus einem Mischkopf (9) austretende Reaktionsgemisch (10) durch eine Formöffnung in den Hohlprofilkörper (8) eingeführt wird, über dessen Austrittsöffnungen (11) das Reaktionsgemisch (10) schaumbildend in den Hohlraum eingebracht wird, dieser zwischen den Deckschichten (1, 2) fortschreitend ausgefüllt wird und nach dem Entformen des Sandwichelements mit dem in diesem als integraler Bestandteil belassenen Hohlkörper (8) eine Kante des flachen Sandwichelementes gebildet wird.

2. Verfahren nach Anspruch 1, **dadurch gekennzeichnet, daß** der Austrittsquerschnitt der Austrittsöffnungen (11) des Hohlprofilkörpers (8) entlang seiner Längserstreckung unter Berücksichtigung der bei der Einführung des Reaktionsgemisches (10) herrschenden Druckverhältnisse derart abgestuft bemessen wird, daß der aus den Austrittsöffnungen (11) austretende Schaum eine gleichmäßige Fließfront (6) zur homogenen Füllung des Hohlraums ausbildet.

3. Verfahren nach Anspruch 1 oder 2, **dadurch gekennzeichnet, daß** die Form zur Ausführung des Schäumvorgangs in eine Position zwischen Hochkantstellung und Flachlage entsprechend einem Winkel a von 0° bis 90° verbracht wird.

4. Verfahren nach einem der Ansprüche 1 bis 3, **dadurch gekennzeichnet, daß** die längste Kante des Sandwichelementes durch den Hohlprofilkörper (8) gebildet wird.

## Claims

1. Method of making flat sandwich elements, wherein a cavity between opposing covering layers (1, 2), inserted in a mould closed on alt sides, is filled with PUR hard foam (3), which is produced from the reaction between at least two plastic components which are supplied by means of a filling tube, are discharged from the filling tube from a series of outlet ports directed toward the cavity and adhere to the covering layers when the volume increases, **characterised in that** inside the mould one of the narrow sides of the cavity is taken up by a hollow section body (8) acting as the filling tube, **in that** the reaction mixture (10) escaping from a mixing head (9) is fed through a mould opening into the hollow section body (8), through whose outlet ports (11) the reaction mixture (10) is fed into the cavity, forming a foam, **in that** the cavity is progressively filled between the covering layers (1,2), and **in that** one edge of the flat sandwich element is formed with the hollow body (8) left behind in it as an integral part thereof after the sandwich element is removed from the mould.

2. Method according to Claim 1, **characterised in that** the outlet cross-section of the outlet ports (11) of the hollow section body (8) is dimensioned in steps, along its longitudinal extension, taking into consideration the pressure conditions prevailing when the reaction mixture (10) is introduced, so that the foam escaping from the outlet ports (11) forms a uniform flow front (6) for homogeneous filling of the cavity.

3. Method according to claim 1 or 2, **characterised in that** the mould used for carrying out the foaming process is brought into a position between the upright position and the flat position, forming an angle a of 0° to 90°.

4. Method according to one of claims 1 to 3, **characterised in that** the longest edge of the sandwich element is formed by the flollow section body (8).

## Revendications

1. Procédé de fabrication d'éléments sandwichs plats selon lequel on remplit une cavité entre deux couches de recouvrement (1, 2), opposées, dans un moule fermé de tous côtés, avec de la mousse dure de polyuréthane (3) formée par la réaction d'au moins deux composants de matière plastique introduits par au moins un tube de remplissage, ces composants sortant du tube de remplissage d'une rangée d'orifices dirigés vers la cavité et se collant aux couches de recouvrement en développant leur volume,
**caractérisé en ce qu'**
à l'intérieur du moule, l'un des petits côtés de la cavité est constitué par le corps du profilé creux (8) fonctionnant comme tube de remplissage, qui introduit le mélange de réaction (10) sortant d'une tête de mélange (9) par un orifice frontal dans le corps profilé creux (8), et par ces orifices de sortie (11) on introduit le mélange de réaction (10) dans la cavité en formant la mousse, cette cavité se remplissant en continu entre les couches de recouvrement (1, 2) et après le démoulage de l'élément sandwich avec le corps creux (8) laissé dans cet élément comme composant intégral, on forme une arête de l'élément sandwich plat.

2. Procédé de fabrication d'éléments sandwichs plats selon la revendication 1,
**caractérisé en ce que**
la section de sortie des orifices de sortie (11) du corps du profilé creux (8) sont étagés suivant la longueur en tenant compte des conditions de pression régnant lors de l'introduction du mélange de réaction (10), et la mousse sortant des orifices de sortie (11) développe un front de coulée (6) régulier pour remplir la cavité de façon homogène.

3. Procédé de fabrication d'éléments sandwichs plats selon les revendications 1 ou 2,
**caractérisé en ce que**
le moule pour réaliser l'opération d'expansion est placé entre la position sur champs et la position à plat suivant un angle a compris entre 0° et 90°.

4. Procédé de fabrication d'éléments sandwichs plats selon l'une des revendications 1 à 3,
**caractérisé en ce que**
l'arête la plus longue de l'élément sandwich est formée par un corps de profilé creux (8).
